# EUROPEAN PATENT SPECIFICATION

(11) **EP 3 926 385 B1**
(45) Date of publication and mention of the grant of the patent: **15.05.2024**
(21) Application number: 20180212.1
(22) Date of filing: 16.06.2020
(51) Int. Cl.: G02B 21/08, G02B 21/24, G02B 21/36, G02B 27/00

(54) **DIGITAL MICROSCOPE AND MICROSCOPIC SET**
DIGITALES MIKROSKOP UND MIKROSKOPISCHER SATZ
MICROSCOPE NUMÉRIQUE ET ENSEMBLE MICROSCOPIQUE

(43) Date of publication of application: 22.12.2021
(73) Proprietor: Carl Zeiss Microscopy GmbH, 07745 Jena (DE); SD Optics, Inc., Seoul (KR); Stereo Display, Inc., Anaheim, CA 92801 (US)
(72) Inventor: GAIDUK, Alexander, 07749 Jena (DE); DRESCHER, Viktor, 99441 Umpferstedt (DE); STEHR, Dominik, 07743 Jena (DE); SOHN, Jin Young, Fullerton, CA California 92833 (US); SEO, Cheong Soo, Brea, CA California 92821 (US); CHO, Gyoungil, Fullerton, CA California 92833 (US); ZARNETTA, Robert, 07778 Lehesten (DE)
(74) Representative: Engel, Christoph Klaus

(56) References cited:
- EP-A1- 3 486 706
- DE-A1- 19 653 234
- DE-A1-102008 030 349
- DE-A1-102008 030 425
- JP-A- H10 170 832
- US-A1- 2018 024 339
- APPL K: "OPTISCHE 3D-KONTROLLE MIT HOECHSTEM KOMFORT", F & M FEINWERKTECHNIK MIKROTECHNIK MIKROELEKTRONIK, HANSER, MUNCHEN, DE, vol. 107, no. 9, 1 September 1999 (1999-09-01), pages 29-31, XP000954989, ISSN: 1437-9503

## Description

The present invention concerns a digital microscope for capturing images of a sample to be microscopically examined with an extended depth of field. Furthermore, the present invention concerns a microscopic set.

The paper by Häusler, G. "A method to increase the depth of focus by two step image processing" in Optics Communications, Volume 6, Issue 1, September 1972, Pages 38-42, teaches a method to obtain an increased depth of field. That method consists of two steps. The first step is to produce a modified incoherent image of a three dimensional object which, though degraded, has the same degradation for all object planes. The second step is to filter this modified image in a coherent image processor to obtain an undegraded image with increased depth of focus.

US 2005/0057812 A1 shows a variable focus system that includes an electrovariable optic and a controller operatively configured for changing the focal configuration of the electrovariable optic. The electrovariable optic includes a plurality of movable optical elements that may be moved substantially in unison with one another so as to change either the focal length of the electrovariable optic, the direction of the focal axis of the electrovariable optic, or both. The variable focus system may be used in conjunction with an image source to construct a 3D floating image projector that projects a series of 2D image.

US 2013/0187669 A1 shows a calibration method for a micro-mirror array device. The micro-mirror array device may operate as a variable focal length lens. The calibration method comprises determining a capacitance value for each micro-mirror element in the array device at a number of predetermined reference angles to provide a capacitance-reference angle relationship. From the capacitance values, an interpolation step is carried to determine intermediate tilt angles for each micro-mirror element in the array. A voltage sweep is applied to the micro-mirror array and capacitance values, for each micro-mirror element in the array, are measured. For a capacitance value that matches one of the values in the capacitance-reference angle relationship, the corresponding voltage is linked to the associated tilt angle to provide a voltage-tilt angle characteristic which then stored in a memory for subsequent use.

US 2005/0225884 A1 teaches a three-dimensional imaging device with a variable focal micromirror array lens that is also known as Micromirror Array Lens System (MALS) and Micromirror Array Lens (MMAL). The MMAL is a reflective Fresnel lens. The imaging device further comprises an optical unit on which an image of an object at a given focal length of the MMAL is formed.

US 2014/0368920 A1 shows micro-mirror arrays that are configured for use in a variable focal length lens. The variable focal length lens comprises a micro-mirror array having a plurality of micro-mirror element arranged in at least a first section and a second section. Each micro-mirror element has a tilt axis and comprises, on each of two opposing sides of the tilt axis, at least one actuation electrode, at least one measurement electrode, and at least one stopper. Additionally, each micro-mirror element in the first section has a first tilt axis range. Each micro-mirror element in the second section has a second tilt axis range. The first tilt axis range is less than the second tilt axis range.

DE 10 2017 101 188 A1 is related to a method for viewing a specimen using a microscope which comprises an objective lens and an image sensor for converting an image formed on the image sensor by the objective lens. A field of view of the microscope can be varied by selecting a section of the image sensor. In one step of the method, an initial image of at least a partial section of the specimen is captured with the microscope, for which a first field of view is selected on the microscope. The initial image is analysed to determine at least two differing fields of view forming a partial area image. A partial area of the initial image is formed by each of the fields of view forming a partial area image. Images of the partial areas of the specimen are captured for each of the determined fields of view forming a partial area image.

DE 10 2017 107 489 B3 is related to a microscope assembly for the three-dimensional capture of a sample to be microscopically examined and for the display of three-dimensional images of the sample under the microscope. The microscope assembly comprises an image capture unit for obtaining photographs of the sample and an image processing unit for generating three-dimensional images of the sample from the photographs. In addition, the microscope assembly comprises at least one display unit for the three-dimensional display of the generated three-dimensional images of the sample. The microscope assembly is configured with an image refresh rate of at least 1 frame per second.

DE 10 2017 123 510 A1 is related to a method for acquiring a stack of microscopic images of a specimen. The microscopic images of the stack are acquired from different focus positions. A plurality of the microscopic images of the specimen is respectively acquired from at least some of the focus positions using different settings of an illumination unit for illuminating the specimen. The illumination settings with which the microscopic images of the specimen are acquired are decided upon individually in each case at least for several of the focus positions.

WO 2005/119331 A1 teaches a variable focal length lens comprising a plurality of micromirrors with two degrees of freedom rotation and one degree of freedom translation. The two degrees of freedom rotation and one degree of freedom translation of the micromirrors are controlled to change the focal length of the lens and to satisfy the same phase conditions for the lights. The lens is diffractive Fresnel lens.

US 6,934,073 B1 teaches a micromirror array lens that is also known as Micromirror Array Lens System (MALS) and Micromirror Array Lens (MMAL). The micromirror array lens consists of many micromirrors with one degree of freedom rotation and one degree of freedom translation and actuating components. As a reflective variable focal length lens, the array of micromirrors makes all lights scattered from one point of an object have the same periodic phase and converge at one point of image plane. As operational methods for the lens, the actuating components control the positions of micromirrors electrostatically and/or electromagnetically. The optical efficiency of the micromirror array lens is increased by locating a mechanical structure upholding micromirrors and the actuating components under micromirrors. The lens can correct aberration by controlling each micromirror independently.

WO 2007/134264 A2 shows a three-dimensional imaging system with a variable focal length micromirror array lens. The micro mirror array lens comprises a plurality of micromirrors, wherein each of the micromirrors is controlled to change the focal length of the Micromirror Array Lens. The imaging system further comprises an optical unit and an image processing unit which produces three-dimensional image data using the images captured by the optical unit and the focal length information of the Micromirror Array Lens.

EP 3 486 706 A1 teaches a functional module for a microscope. That functional module comprises a mechanical interface for removable mounting the functional module to a module support of the microscope. The functional module further comprises an optical interface for establishing an optical path from an objective of the microscope to the functional module. Furthermore, the functional module comprises at least one image sensor as well as a first microelectromechanical optical system and a second microelectromechanical optical system. The first microelectromechanical optical system is configured for enhancing a depth of field on a first optical subpath that is directed to the image sensor. The second microelectromechanical optical system is configured for enhancing a depth of field on a second optical subpath that is directed to the image sensor.

An object of the present invention is to provide a digital microscope and a microscopic set that allow recording microscopic images with an improved image quality with extended depth of field and maintaining lateral resolution over extended depth of field.

The aforementioned object is achieved by a microscope according to the enclosed claim 1 and by a microscopic set according to the enclosed claim 9.

The microscope according to the invention is a digital microscope in which microscopic images are recorded electronically and processed digitally. This digital microscope preferably does not comprise any oculars.

The digital microscope is configured for capturing microscopic images of a sample to be microscopically examined, wherein these images show an extended depth of field. The depth is preferably increased by a factor of at least 5 and more preferably of at least 10, and more preferably of at least 20, and even more preferably of at least 40. The digital microscope is preferably configured for processing the microscopic images with an extended depth of field to an image with 2.5 or three dimensions. The digital microscope is preferably configured for processing of at least 1 image with 2.5 or three dimensions per second. The digital microscope is further preferably configured for processing of at least 10 images with 2.5 or three dimensions per second.

The digital microscope comprises a stand with an opening for receiving an optical unit. The stand is configured to be placed onto a surface of a workspace, e. g. onto a table.

Further, the digital microscope comprises an optical unit for capturing microscopic images of the sample to be microscopically examined. The optical unit is removably mounted onto the stand. The optical unit is carried by the stand.

The optical unit comprises an objective for gathering light from the sample to be microscopically examined. The objective preferably comprises a plurality of optical lenses.

The optical unit comprises at least one image sensor for converting an image transferred from the objective to the image sensor into an electrical signal. From there, the image sensor converts an image taken by the objective into an electrical signal. The image sensor is preferably a semiconductor, e.g., a CMOS. The image sensor is preferably further equipped with an FPGA-based circuitry or a CPU-based circuitry to further enhance speed or quality of image processing or a processing of a stack of images.

Furthermore, the optical unit comprises a microelectromechanical optical system on an optical path from the objective to the image sensor. The microelectromechanical optical system is configured for extending a depth of field on the optical path from the objective to the image sensor. The microelectromechanical optical system is preferably a Micromirror Array Lens System (MALS) or a Micromirror Array Lens (MMAL)

According to the invention, the optical unit comprises a mounting unit. That mounting unit performs at least three functions. The mounting unit comprises a first portion for removable mounting the mounting unit into the opening of the stand. Thereby, the optical unit is mounted into the opening of the stand. Hence, the optical unit can be removable mounted onto the stand.

The mounting unit further comprises a second portion for removable mounting an illumination unit onto the mounting unit. Hence, the illumination unit can be removable mounted onto the optical unit. The illumination unit is configured to illuminate the sample to be microscopically examined. The microscope preferably comprises at least one illumination unit, wherein this one illumination unit and one of the illumination units, respectively, is removably mounted onto the second portion of the mounting unit. Preferably, the illumination unit can alternatively be mounted onto the objective. The mounting of the illumination unit is preferably further supported by providing an interface for recognition of the illumination unit and preferably for further integration of the illumination unit into functional communication path between different sub-modules. The interface is preferably an electric, wireless, optical, or contactless interface.

The mounting unit further comprises a third portion for removable mounting an additional lens onto the mounting unit into an optical axis of the objective. Hence, the objective can be supplemented by the exchangeable additional lens. A magnification of the microscope is changed by the additional lens. The microscope preferably comprises at least one additional lens, wherein this one additional lens and one of the additional lenses, respectively, is removably mounted onto the third portion of the mounting unit.

The additional lens and the additional lenses, respectively, preferably comprise a mounting interface for mounting a further illumination unit. The third portion of the mounting unit can be preferably used for mounting further components like an additional opto-mechanical unit, a set of mirrors for tilted 360 degree observation or a sample manipulation tool, that can apply magnetic or electric field on a sample.

A special benefit of the microscope according to the invention is that images with an extended depth of field (EDoF) can be captured with different optical magnifications by adding and/or exchanging the additional lens. A large object field on the low magnification side and a high optical resolution on the high magnification side can be provided. Since the microscope is configured for removable mounting the additional lens a high reproducibility of the optical configuration is guaranteed. The mounting unit ensures a robustness of the mounted additional lens against vibrations in a shop floor. Since the microscope is configured for removable mounting of the additional lens different additional lenses can be exchanged against each other many times during an operation time of the microscope, preferably, at least 100 times during the operation time of the microscope. The mounting unit allows an easy exchange of the additional lenses and it prevents errors by the user. Furthermore, the mounting unit allows a flexible mounting of the optical unit to different types of the stand and a flexible mounting of different types of the optical unit to the stand.

In preferred embodiments of the microscope according to the invention, the opening of the stand shows a circular cross section. The first portion of the mounting unit shows a circular cross section that fits into the circular cross section of the opening of the stand. The circular cross sections allow an easy removable mounting of the optical unit onto the stand. The optical unit is mounted by putting the first portion of the mounting unit into the opening of the stand. The stand comprises preferably a clamping element for clamping the first portion of the mounting unit within the opening of the stand. In alternative embodiments, the cross sections of the first portion of the mounting unit and the opening of the stand may be of rectangular, polygonal elliptical or irregular shape.

The first portion of the opening unit is of cylindrical shape. That cylindrical shape can be easily put into the opening of the stand. That cylindrical shape can be reliably fixed within the opening of the stand. That cylindrical shape is preferably arranged coaxially to the optical axis that is preferably arranged vertically. It is a standard in the technical field of microscopes that opening units of stands are of cylindrical shape. Many types of stands provide such an opening.

The second portion of the opening unit is of cylindrical shape. It is a standard in the technical field of microscopes that illumination units can be removably mounted onto portions of cylindrical shape. Many types of microscopes provide such a portion. Hence, many types of illumination units can be mounted onto the microscope of the invention.

In preferred embodiments of the microscope according to the invention, the first portion and the second portion of the mounting unit are arranged coaxially. Preferably, the first portion and the second portion are arranged coaxially to the optical axis that is preferably arranged vertically. The first portion and the second portion of the mounting unit are preferably arranged one upon the other. The first portion and the second portion of the mounting unit are preferably arranged immediately next to each other. The mounting unit may comprise an extension at the first portion or the second portion.

The diameter of the first portion of the mounting unit is bigger than a diameter of the second portion of the mounting unit. Hence, a circumferential step is formed between the first portion and the second portion. In preferred embodiments of the microscope according to the invention, the diameter of the first portion of the mounting unit is between 50 mm and 100 mm. That diameter is preferably 76 mm since that is a common standard in the technical field of microscopes. Hence, that diameter of the first portion of the mounting unit is preferably configured according to the 76 mm standard. The diameter of the second portion of the mounting unit is preferably between 50 mm and 100 mm. That diameter is preferably 66 mm since that is a common standard in the technical field of microscopes. Hence, that diameter of the second portion of the mounting unit is preferably configured according to the 66 mm standard.

In preferred embodiments of the microscope according to the invention, the third portion of the mounting unit is formed as a part of a bayonet mount for receiving a counterpart of the bayonet mount. That counterpart is formed at the additional lens. Hence, the additional lenses can be mounted easily and reliably onto the optical unit. That counterpart of the bayonet mount is preferably also formed at a further illumination or at a set of mirrors for tilted 360 degree observation or at a manipulation tool for manipulating the sample.

In preferred embodiments of the microscope according to the invention, the first portion of the mounting unit, the second portion of the mounting unit, and the third portion of the mounting unit are arranged coaxially. Preferably, the first portion of the mounting unit, the second portion of the mounting unit, and the third portion of the mounting unit are arranged coaxially to the optical axis that is preferably arranged vertically. The first portion of the mounting unit, the second portion of the mounting unit, and the third portion of the mounting unit are preferably arranged one upon the other. The second portion of the mounting unit and the third portion of the mounting unit are preferably arranged immediately next to each other.

The third portion of the mounting unit shows a diameter that is preferably between 10 mm and 50 mm.

In preferred embodiments of the microscope according to the invention, the counterpart of the bayonet mount is formed by at least two wings at a circumference of the additional lens. Preferably, there are three wings at a circumference of the additional lens. These wings and/or spaces between these wings show arcs that are preferably different in order to allow only one rotational position when mounting the bayonet mount. Accordingly, these wings are preferably not symmetrical. The part of the bayonet mount that is formed by the third portion of the mounting unit is preferably formed by an opening in the mounting unit. This opining shows at least two slots for receiving the wings at a circumference of the additional lens. Each of the additional lenses comprises the counterpart of the bayonet mount, wherein all of the counterparts fit to the part of the bayonet mount that is formed by the third portion of the mounting unit.

In preferred embodiments of the microscope according to the invention, the third portion of the mounting unit comprises first electrical contacts for electrically contacting second electrical contacts that are comprised by the additional lens. The first electrical contacts electrically contact the second electrical contacts when the additional lens is mounted onto the third portion of the mounting unit. The second electrical contacts of the additional lens are electrically connected to an identification circuit that is arranged within or at a ring of the lens. Preferably, each of the additional lenses shows such second electrical contacts. Hence, an identification of the mounted additional lens is possible at the microscope. The number of the first electrical contacts is preferably four.

The number of the second electrical contacts is preferably four.

In preferred embodiments of the microscope according to the invention, the at least one additional lens is optically configured for providing an additional optical magnification of the sample to be microscopically examined. Hence, the optical magnification of the microscope is changed when one of the additional lenses is removably mounted onto the mounting unit. The optical magnification of the microscope as a whole depends on the optical magnification of the objective and on the optical magnification of the mounted additional lens. That optical magnification of the microscope is preferably between 0.2 and 5. In the case that no additional lens is mounted onto the microscope the optical magnification of the microscope only depends on the optical magnification of the objective. The optical magnification of the objective is preferably between 1 and 1.5.

The image sensor shows a length and/or a width that is preferably between 3/4 inches (1.905 cm) and 3/2 inches (3.8 cm). A field of view in relation to the image sensor with a length of 1 inch (2.54 cm) shows a length of preferably at least 30 mm if the optical magnification of the microscope including the mounted additional lens is less than 0.5. A field of view in relation to the image sensor with a length of 1 inch (2.54 cm) shows a length of preferably at most 6 mm if the optical magnification of the microscope including the mounted additional lens is more than 2.

If the optical magnification of the microscope including the mounted additional lens is more than 2 an extended depth of field effectuated by the microelectromechanical optical system is preferably at least ±0.5 mm. If the optical magnification of the microscope including the mounted additional lens is less than 0.5 an extended depth of field effectuated by the microelectromechanical optical system is preferably at least ±30 mm.

Each of the additional lenses preferably comprises a spacer ring that defines a distance between a lens element of the additional lens and a mounting element of the additional lens. Additionally or alternatively to the spacer, a further element like a dedicated illumination unit is preferably mounted between the lens element of the additional lens and the mounting element of the additional lens. The mounting element of the additional lens is preferably the counterpart of the bayonet mount. A correct function of the additional lens together with the objective is ensured by the defined distance. A working distance preferably extends from the removably mounted additional lens, especially, from the lens element of the removably mounted additional lens to a sample holder of the microscope. The sample holder is preferably a part of the stand. The working distance is preferably vertical. The working distance is preferably variable from 10 mm to 150 mm. The working distance is preferably variable over a range of at least 70 mm, more preferably at least 100 mm.

In preferred embodiments of the microscope according to the invention, the stand comprises a lift for lifting and lowering the optical unit. The working distance is variable by using the lift. The working distance is preferably also variable by adjusting the sample holder. The lift preferably comprises a vertical pillar and a horizontal arm. The arm is borne by the pillar.

In preferred embodiments of the microscope according to the invention, the optical unit comprises a housing that covers at least the image sensor and the microelectromechanical optical system. The housing is preferably permanently fixed to the mounting unit. The housing is preferably permanently fixed to the objective.

In preferred embodiments of the microscope according to the invention, the optical unit is configured for an operation in a fixed combination of at least the microelectromechanical optical system, the mounting unit and the objective. That fixed combination preferably comprises the housing, too. A special benefit of this fixed combination is that it guarantees high reproducibility of the optical configuration since the user has not to exchange anything of this combination. The user has to exchange the additional lenses.

In preferred embodiments of the microscope according to the invention, the image sensor is also exchangeable. Hence, different types of the image sensor can be mounted into the optical unit.

In preferred embodiments of the microscope according to the invention, the optical unit comprises a first beam splitter for optically coupling the microelectromechanical optical system into the optical path from the objective to the image sensor. Hence, the microelectromechanical optical system is configured for extending a depth of field on the optical path. The optical unit preferably comprises a first mirror for directing light from the first beam splitter to the image sensor.

In preferred embodiments of the microscope according to the invention, the microelectromechanical optical system comprises an array of moveable micromirrors that is also known as Micromirror Array Lens System (MALS) and Micromirror Array Lens (MMAL). Each of the movable micromirrors shows at least one degree of freedom rotation and one degree of freedom translation. The degree of freedom translation of the moveable micromirrors of the microelectromechanical optical system is preferably along to the optical path.

The microelectromechanical optical system is preferably a mirror array lens system. Such mirror array lens systems are also known as Micromirror Array Lens System (MALS) and Micromirror Array Lens (MMAL) and they are offered under the trademark MALS.

In preferred embodiments of the microscope according to the invention, the removable mountable illumination unit is formed as a ring-light illumination. If the illumination unit is removably mounted to the third portion of the mounting unit the ring-light illumination is coaxial to the optical axis that is preferably vertical. The ring-light illumination preferably surrounds the mounted additional lens.

The removable mountable illumination unit is preferably of circular ring shape. The illumination unit preferably comprises a plurality of lighting elements that are arranged on circles on the circular ring shape. The lighting elements are preferably light-emitting diodes (LED). Each circle comprises a plurality of the LEDs. The circles are preferably concentric. The circles preferably lie in a plane that is perpendicular to the optical axis of the microscope. That plane is preferably horizontal. Preferably, there are multiple illumination planes possible with different or with the same orientation of the lighting elements.

In preferred embodiments of the microscope according to the invention, the circles of the lighting elements are separately powerable. Hence, each of the circles can individually controlled for emitting light.

Each of the circles of the lighting elements is preferably subdivided into at least four sectors. These sectors are preferably equal. These sectors of the lighting elements are separately powerable. Hence, each of the sectors can individually controlled for emitting light. Preferably, each of the sectors of each of the circles is separately powerable. The number of the sectors is preferably eight.

Each of the circles of the lighting elements shows a diameter. These diameters are different. The biggest of these diameters is preferably bigger than the twofold smallest of these diameters. The biggest of these diameters is preferably between 5 cm and 15 cm. The smallest of these diameters is preferably between 2 cm and 7 cm.

The circles and/or sectors of the lighting elements of the illumination unit allow a homogenous illumination of the sample over the complete field of view and for the different magnifications by the additional lenses.

In preferred embodiments of the microscope according to the invention, the optical unit comprises a coaxial illumination unit that is fixedly mounted to the objective. The coaxial illumination unit is preferably located in the housing. The coaxial illumination unit preferably comprises a single full-area illumination unit or a set of illumination areas. The number of illumination areas is preferably two or four or more. The optical unit preferably comprises a second beam splitter for coupling light of the coaxial illumination unit into the optical path from the image sensor to the sample. The optical unit preferably comprises a second mirror for directing light of the illumination unit to the second beam splitter. The second mirror is preferably moveable in order to compensate the additional distances caused by the mounting unit. The second beam splitter and the second mirror are preferably also located in the housing.

Preferred embodiments of the microscope according to the invention further comprise a control circuitry for controlling the microelectromechanical optical system and the image sensor. Preferably, the control circuitry is further configured for processing images converted by the image sensor.

Preferably, the control circuitry is further configured for forming a lens surface of the microelectromechanical optical system that is preferably a Micromirror Array Lens System (MALS) or Micromirror Array Lens (MMAL).

Preferably, the control circuitry is further configured for taking a plurality of images with different values of focus resulting in a stack of images. The different values of focus are obtained by controlling the microelectromechanical optical system, especially, by moving the movable micromirrors of the microelectromechanical optical system, more especially; by moving the movable micromirrors of the microelectromechanical optical system to form a lens surface of the microelectromechanical optical system each with varying values of the focal length.

Preferably, the control circuitry is further configured for processing the stack of images to an image with an extended depth of field.

Preferably, the control circuitry is further configured for processing the stack of images or the image with an extended depth of field to achieve a 2.5-dimensional image or a three-dimensional image. Preferably, the control circuitry is further configured for processing a plurality of the stacks of images or a plurality of the images with an extended depth of field to achieve a three-dimensional image.

Preferably, the control circuitry is further configured to identify the mounted additional lens by reading out the identification circuit of the mounted additional lens. Preferably, calibration data for each of the additional lenses are stored in the control circuitry or in the identification circuit. The control circuitry is preferably configured for using these data in order to calibrate the microscope adequately to the mounted additional lens.

Preferably, the control circuitry is further configured to control the mounted illumination unit, especially, to control the individual circles and/or individual sectors of the lighting elements of the mounted illumination unit.

The control circuitry is preferably located in the housing.

The optical unit preferably comprises an electrical power supply that supplies the microelectromechanical optical system and the image sensor. The electrical power supply preferably further supplies the coaxial illumination unit. The electrical power supply preferably further supplies the control circuitry. The electrical power supply preferably further supplies the mounted illumination unit.

The optical unit preferably comprises a first data interface. The optical unit is controllable via this first data interface, e.g., by a PC. This first data interface is preferably a USB interface, a GigE interface, a CamerLink interface, or a CoaxExpress interface.

The optical unit preferably comprises a second data interface that is connected to a light controller for controlling the mounted illumination unit.

The microscopic set comprises the microscope according to the invention and at least two of the additional lenses each mountable onto the third portion of the mounting unit. The additional lenses show different optical magnifications. The microscopic set preferably comprises a preferred embodiment of the microscope according to the invention.

A special benefit of the microscopic set according to the invention is that it provides a microscope and additional lenses for capturing images with an extended depth of field with different optical magnifications. The optical magnification can be changed easily by exchanging the additional lenses.

The optical magnification of the microscope as a whole depends on the optical magnification of the objective and on the optical magnification of the mounted additional lens. That common optical magnification of the objective and the mounted additional lens is preferably between 0.2 and 5. A common optical magnification of the objective and the additional lens showing the biggest optical magnification is preferably bigger than a fivefold common optical magnification of the objective and the additional lens showing the smallest optical magnification. The common optical magnification of the objective and the additional lens showing the smallest optical magnification is preferably smaller than 0.6. The common optical magnification of the objective and the additional lens showing the biggest optical magnification is preferably bigger than 2.

The microscopic set preferably comprises at least two different illumination units each mountable onto the second portion of the mounting unit. Hence, the microscope can be easily adapted in order to illuminate different samples or in order to microscopically examine a sample with different optical magnifications.

Additional advantages, details and refinements of the invention will become apparent from the following description of preferred embodiments of the invention, making reference to the drawing. There are shown:
- Fig. 1:: a schematic representation of a preferred embodiment of a digital microscope according to the invention;
- Fig. 2:: a further schematic representation of the digital microscope shown in Fig. 1;
- Fig. 3:: an optically schematic representation of the digital microscope shown in Fig. 2; and
- Fig. 4:: a detailed view of a ring-light illumination unit shown in Fig. 2.

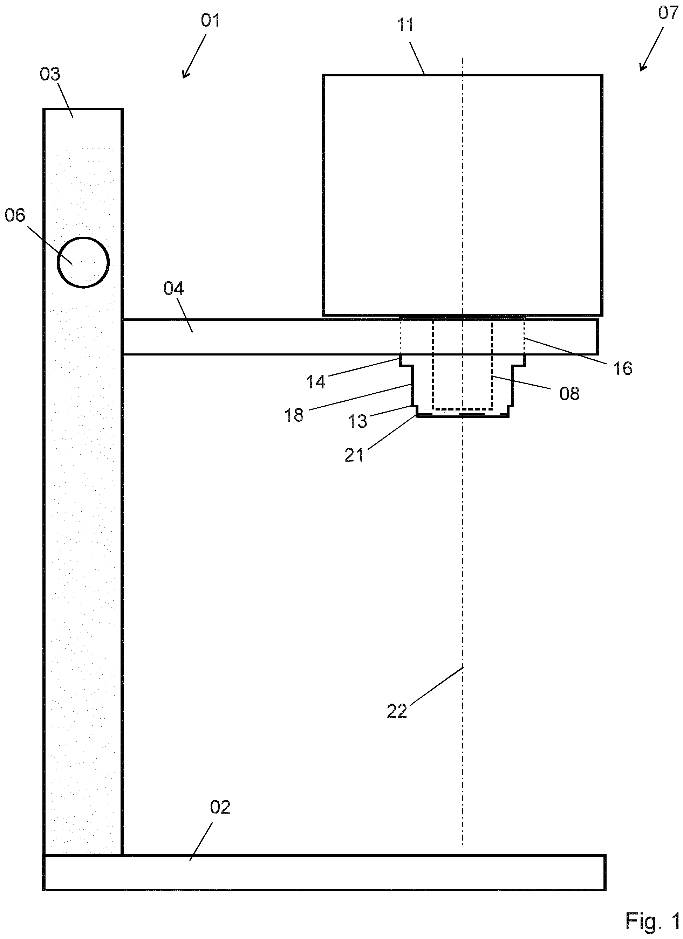

Fig. 1 shows a schematic representation of a preferred embodiment of a digital microscope according to the invention. The microscope comprises a stand 01 with a base plate 02, a pillar 03 and an arm 04. The arm 04 can be lifted by rotating a knob 06.

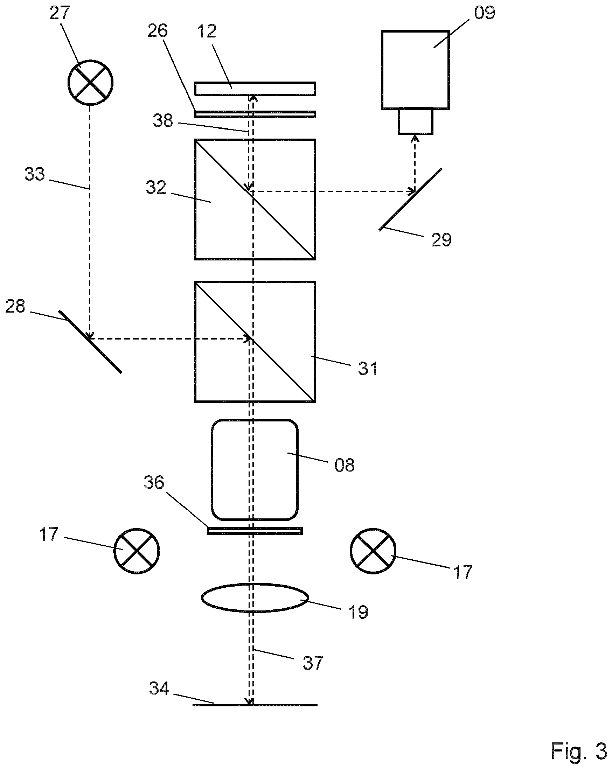

The microscope further comprises an optical unit 07 that is held by the stand 01. The optical unit 07 comprise an objective 08, an image sensor 09 (shown in Fig. 3) within a housing 11, a microelectromechanical optical system 12 (shown in Fig. 3) within the housing 11, and a mounting unit 13. The mounting unit 13 performs three functions. A first function is to allow a removable mounting of the optical unit 07 onto the stand 01. For this, the mounting unit 13 comprises a first portion 14 of cylindrical shape. This first portion 14 of cylindrical shape fits into a circular opening 16 in the arm 04. This first portion 14 of cylindrical shape shows an exemplary diameter of 76 mm.

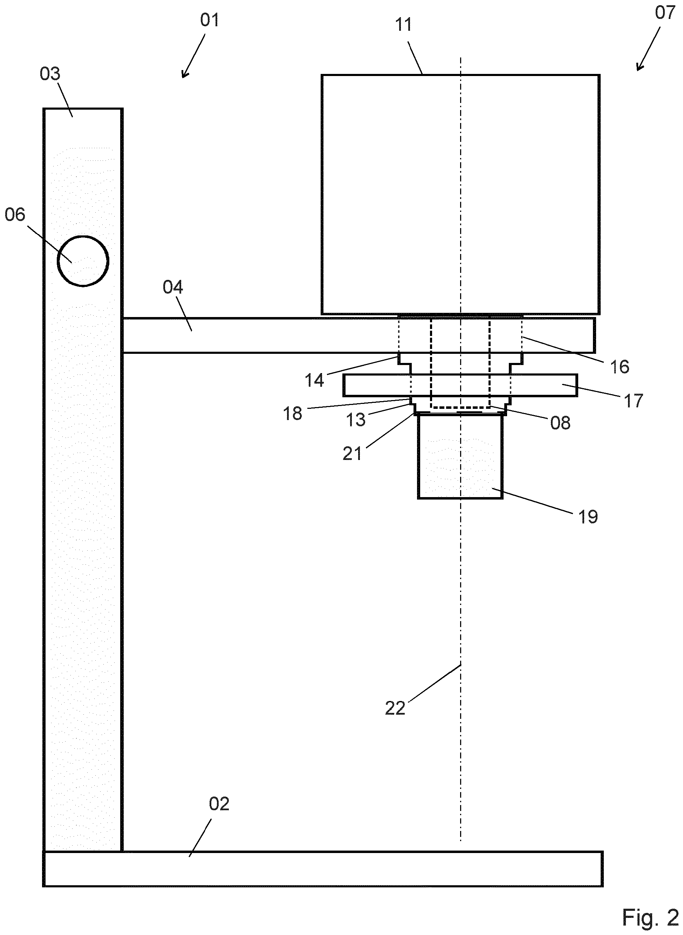

A second function is to allow a removable mounting of a ring-light illumination unit 17 (shown in Fig. 2) onto the optical unit 07. For this, the mounting unit 13 comprises a second portion 18 of cylindrical shape. This second portion 18 of cylindrical shape shows an exemplary diameter of 66 mm. An extension tube (not shown) of the second portion 18 can be used for changing an illumination working distance or for varying the illumination working distance or for a free space between the objective 08 and a sample 34 (shown in Fig. 3). The extension tube maintains the diameter for easy adapting the mounting unit 13 or provides an appropriate diameter.

A third function is to allow a removable mounting of an additional lens 19 (shown in Fig. 2) onto the optical unit 07. For this, the mounting unit 13 comprises a third portion 21. This third portion 21 forms a part of a bayonet mount.

The ring-light illumination unit 17 can alternatively be mounted on the additional lens 19 (shown in Fig. 2) or to an extension tube (not shown).

The mounting unit 13 is hollow and surrounds the objective 08. After the additional lens 19 (shown in Fig. 2) is mounted onto the optical unit 07 the additional lens 19 (shown in Fig. 2) lies with the objective 08 in an optical axis 22 of the microscope.

Fig. 2 shows a further schematic representation of the digital microscope shown in Fig. 1. In this representation, the ring-light illumination unit 17 and the additional lens 19 are removable mounted onto the mounting unit 13.

Fig. 3 shows an optically schematic representation of the digital microscope shown in Fig. 2. The image sensor 09 and the microelectromechanical optical system 12 are located jointly with a first λ/4 waveplate 26, a coaxial illumination unit 27, a second mirror 28, a first mirror 29, an illumination beam splitter 31, and a detection beam splitter 32 in the housing 11 (shown in Fig. 2).

Light 33 of the coaxial illumination unit 27 is directed via the second mirror 28 to the illumination beam splitter 31 in order to direct it through the objective 08, a second λ/4 waveplate 36, and the removably mounted additional lens 19 to a sample 34.

Light 37 reflected by the sample 34 is directed through the removably mounted additional lens 19, the second λ/4 waveplate 36, the objective 08, the illumination beam splitter 31, the detection beam splitter 32, and the first λ/4 waveplate 26 to the microelectromechanical optical system 12.

Light 38 reflected by the microelectromechanical optical system 12 is directed through the first λ/4 waveplate 26, the detection beam splitter 32, and the first mirror 29 to the image sensor 09.

The removably mounted ring-light illumination unit 17 also illuminates the sample 34. Hence, the sample 34 can be illuminated by the fixed coaxial illumination unit 27 and/or the removably mounted ring-light illumination unit 17.

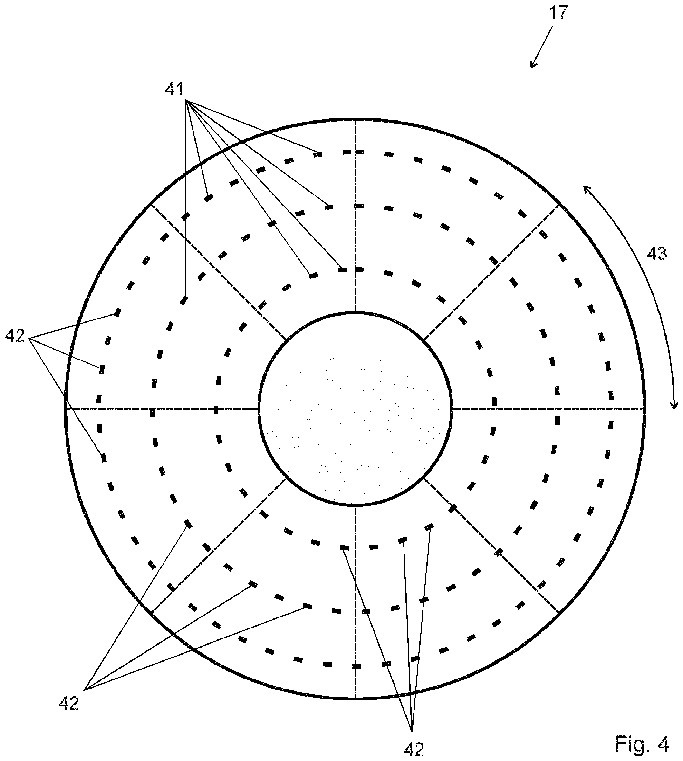

Fig. 4 shows a detailed view of the ring-light illumination unit 17 shown in Fig. 2 and in Fig. 3. This view is a cross section that is perpendicular to the optical axis 22 (shown in Fig. 2). The ring-light illumination unit 17 comprises a plurality of LEDs 41. These LEDs 41 are arranged at three concentric circles 42. Each of the circles 42 is subdivided into eight sectors 43. Each of the sectors 43 in each of the circles 42 is individually powerable.

### List of reference numerals

- 01: stand
- 02: base plate
- 03: pillar
- 04: arm
- 05: -
- 06: knob
- 07: optical unit
- 08: objective
- 09: image sensor
- 10: -
- 11: housing
- 12: microelectromechanical optical system
- 13: mounting unit
- 14: first portion
- 15: -
- 16: opening
- 17: ring-light illumination unit
- 18: second portion
- 19: additional lens
- 20: -
- 21: third portion
- 22: optical axis
- 23: -
- 24: -
- 25: -
- 26: first λ/4 waveplate
- 27: coaxial illumination unit
- 28: second mirror
- 29: first mirror
- 30: -
- 31: illumination beam splitter
- 32: detection beam splitter
- 33: light
- 34: sample
- 35: -
- 36: second λ/4 waveplate
- 37: reflected light
- 38: reflected light
- 39: -
- 40: -
- 41: LED
- 42: circle
- 43: sector

## Claims

1. Digital microscope for capturing images of a sample (34) to be microscopically examined with an extended depth of field; comprising:
- a stand (01) with an opening (16) for receiving an optical unit (07), wherein the opening (16) of the stand (01) shows a circular cross section; and
- an optical unit (07) comprising:
o an objective (08) for gathering light from the sample (34) to be microscopically examined;
o an image sensor (09) for converting an image transferred from the objective (08) to the image sensor (09) into an electrical signal;
o a microelectromechanical optical system (12) on an optical path from the objective (08) to the image sensor (09), wherein microelectromechanical optical system (12) is configured for extending a depth of field at the optical path; and
o a mounting unit (13) comprising a first portion (14) for removable mounting the mounting unit (13) into the opening (16) of the stand (01), a second portion (18) for removable mounting an illumination unit (17) onto the mounting unit (13), and a third portion (21) for removable mounting an additional lens (19) onto the mounting unit (13) into an optical axis (22) of the objective (08); wherein the first portion (14) of the mounting unit (13) shows a circular cross section that fits into the circular cross section of the opening (16) of the stand (01); wherein the first portion (14) of the mounting unit (13) is of cylindrical shape; wherein the second portion (18) of the mounting unit (13) is of cylindrical shape; wherein the first portion (14) and the second portion (18) of the mounting unit (13) are arranged coaxially; wherein a diameter of the first portion (14) of the mounting unit (13) is larger than a diameter of the second portion (18) of the mounting unit (13); and wherein the third portion (21) of the mounting unit (13) is formed as a part of a bayonet mount for receiving a counterpart of the bayonet mount that is formed at the additional lens (19).

2. Digital microscope according to claim 1, **characterized in that** the diameter of the first portion (14) of the mounting unit (13) is configured according to the 76 mm standard, wherein the diameter of the second portion (18) of the mounting unit (13) is configured according to the 66 mm standard.

3. Digital microscope according to claim 1 or 2, **characterized in that** the counterpart of the bayonet mount is formed by at least two wings at a circumference of the additional lens (19).

4. Digital microscope according to one of the claims 1 to 3, **characterized in that** the third portion (21) of the mounting unit (13) comprises first electrical contacts for contacting second electrical contacts of the additional lens (19), wherein the second electrical contacts of the additional lens (19) are electrically connected to an identification circuit of the additional lens (19).

5. Digital microscope according to one of the claims 1 to 4, **characterized in that** the optical unit (07) is configured for an operation in a fixed combination of the microelectromechanical optical system (12), the objective (08), and a housing (11) that covers at least the microelectromechanical optical system (12) and the image sensor (09).

6. Digital microscope according to one of the claims 1 to 5, **characterized in that** the microelectromechanical optical system (12) comprises an array of moveable micromirrors, wherein each of the movable micromirrors shows one degree of freedom rotation and one degree of freedom translation.

7. Digital microscope according to one of the claims 1 to 6, **characterized in that** the illumination unit (17) is formed as a ring-light illumination; wherein the illumination unit (17) is of circular ring shape; wherein the illumination unit (17) comprises a plurality of lighting elements (41) that are arranged on circles (42) on the circular ring shape; and wherein the circles (42) of the lighting elements (41) are separately powerable.

8. Digital microscope according to claim 7, **characterized in that** the circles (42) of the lighting elements (41) are subdivided into at least four sectors (43), wherein the sectors (43) of the lighting elements (41) are separately powerable.

9. Microscopic set; comprising a microscope according to one of the claims 1 to 8, and at least two additional lenses (19) each mountable onto the third portion (21) of the mounting unit (13), wherein the additional lenses (19) show different optical magnifications.

10. Microscopic set according to claim 9, **characterized in that** a common optical magnification of the objective (08) and the additional lens (19) showing the biggest optical magnification is bigger than a fivefold common optical magnification of the objective (08) and the additional lens (19) showing the smallest optical magnification.

11. Microscopic set according to claim 9 or 10, **characterized in that** a common optical magnification of the objective (08) and the additional lens (19) showing the smallest optical magnification is smaller than 0.5; wherein a common optical magnification of the objective (08) and the additional lens (19) showing the biggest optical magnification is bigger than 2.

12. Microscopic set according to one of the claims 9 to 11, **characterized in that** it further comprises at least two different illumination units (17) each mountable onto the second portion (18) of the mounting unit (13).

## Patentansprüche

1. Digitales Mikroskop zum Erfassen von Bildern einer Probe (34), die mikroskopisch untersucht werden soll, mit einer erweiterten Schärfentiefe; umfassend:
- einen Ständer (01) mit einer Öffnung (16) zum Aufnehmen einer optischen Einheit (07), wobei die Öffnung (16) des Ständers (01) einen kreisförmigen Querschnitt aufweist; und
- eine optische Einheit (07), umfassend:
o ein Objektiv (08) zum Sammeln von Licht von der Probe (34), die mikroskopisch untersucht werden soll;
o einen Bildsensor (09) zum Umwandeln eines von dem Objektiv (08) zu dem Bildsensor (09) übertragenen Bilds in ein elektrisches Signal;
o ein mikroelektromechanisches optisches System (12) auf einem optischen Weg von dem Objektiv (08) zu dem Bildsensor (09), wobei das mikroelektromechanische optische System (12) ausgelegt ist zum Erweitern einer Schärfentiefe an dem optischen Weg; und
o eine Befestigungseinheit (13), umfassend einen ersten Abschnitt (14) zum entfernbaren Befestigen der Befestigungseinheit (13) in der Öffnung (16) des Ständers (01), einen zweiten Abschnitt (18) zum entfernbaren Befestigen einer Ausleuchtungseinheit (17) auf der Befestigungseinheit (13) und einen dritten Abschnitt (21) zum entfernbaren Befestigen einer zusätzlichen Linse (19) auf der Befestigungseinheit (13) auf einer optischen Achse (22) des Objektivs (08); wobei der erste Abschnitt (14) der Befestigungseinheit (13) einen kreisförmigen Querschnitt aufweist, der in den kreisförmigen Querschnitt der Öffnung (16) des Ständers (01) passt; wobei der erste Abschnitt (14) der Befestigungseinheit (13) von zylindrischer Gestalt ist; wobei der zweite Abschnitt (18) der Befestigungseinheit (13) von zylindrischer Gestalt ist; wobei der erste Abschnitt (14) und der zweite Abschnitt (18) der Befestigungseinheit (30) koaxial angeordnet sind; wobei ein Durchmesser des ersten Abschnitts (14) der Befestigungseinheit (13) größer ist als ein Durchmesser des zweiten Abschnitts (18) der Befestigungseinheit (13); und wobei der dritte Abschnitt (21) der Befestigungseinheit (13) als ein Teil einer Bajonettfassung gebildet ist zum Aufnehmen eines Gegenstücks der Bajonettfassung, das an der zusätzlichen Linse (19) gebildet ist.

2. Digitales Mikroskop nach Anspruch 1, **dadurch gekennzeichnet, dass** der Durchmesser des ersten Abschnitts (14) der Befestigungseinheit (13) gemäß dem 76-mm-Standard ausgelegt ist, wobei der Durchmesser des zweiten Abschnitts (18) der Befestigungseinheit (13) gemäß dem 66-mm-Standard ausgelegt ist.

3. Digitales Mikroskop nach Anspruch 1 oder 2, **dadurch gekennzeichnet, dass** das Gegenstück der Bajonettfassung gebildet ist durch mindestens zwei Flügel an einem Umfang der zusätzlichen Linse (19).

4. Digitales Mikroskop nach einem der Ansprüche 1 bis 3, **dadurch gekennzeichnet, dass** der dritte Abschnitt (21) der Befestigungseinheit (13) erste elektrische Kontakte zum Kontaktieren zweiter elektrischer Kontakte der zusätzlichen Linse (19) umfasst, wobei die zweiten elektrischen Kontakte der zusätzlichen Linse (19) elektrisch mit einer Identifikationsschaltung der zusätzlichen Linse (19) verbunden sind.

5. Digitales Mikroskop nach einem der Ansprüche 1 bis 4, **dadurch gekennzeichnet, dass** die optische Einheit (07) für einen Betrieb in einer festen Kombination aus dem mikroelektromechanischen optischen System (12), dem Objektiv (08) und einem Gehäuse (11), das mindestens das mikroelektromechanische optische System (12) und den Bildsensor (09) bedeckt, ausgelegt ist.

6. Digitales Mikroskop nach einem der Ansprüche 1 bis 5, **dadurch gekennzeichnet, dass** das mikroelektromechanische optische System (12) eine Anordnung aus beweglichen Mikrospiegeln umfasst, wobei jeder der beweglichen Mikrospiegel einen Grad von Freiheitsrotation und einen Grad von Freiheitstranslation aufweist.

7. Digitales Mikroskop nach einem der Ansprüche 1 bis 6, **dadurch gekennzeichnet, dass** die Ausleuchtungseinheit (17) als eine Ringlichtbeleuchtung gebildet ist; wobei die Ausleuchtungseinheit (17) eine kreisförmige Ringgestalt hat; wobei die Ausleuchtungseinheit (17) mehrere Beleuchtungselemente (41) umfasst, die auf Kreisen (42) auf der kreisförmigen Ringgestalt angeordnet sind; wobei die Kreise (42) der Beleuchtungselemente (41) separat bestromt werden können.

8. Digitales Mikroskop nach Anspruch 7, **dadurch gekennzeichnet, dass** die Kreise (42) der Beleuchtungselemente (41) in mindestens vier Sektoren (43) unterteilt sind, wobei die Sektoren (43) der Beleuchtungselemente (41) separat bestromt werden können.

9. Mikroskopischer Satz; umfassend ein Mikroskop nach einem der Ansprüche 1 bis 8, und mindestens zwei zusätzliche Linsen (19), die jeweils an dem dritten Abschnitt (21) der Befestigungseinheit (13) befestigt werden können, wobei die zusätzlichen Linsen (19) unterschiedliche optische Vergrößerungen aufweisen.

10. Mikroskopischer Satz nach Anspruch 9, **dadurch gekennzeichnet, dass** eine gemeinsame optische Vergrößerung des Objektivs (08) und der zusätzlichen Linse (19), die die größte optische Vergrößerung zeigt, größer ist als eine fünffache gemeinsamen optische Vergrößerung des Objektivs (08) und der zusätzlichen Linse (19), die die kleinste optische Vergrößerung zeigt.

11. Mikroskopischer Satz nach Anspruch 9 oder 10, **dadurch gekennzeichnet, dass** eine gemeinsame optische Vergrößerung des Objektivs (08) und der zusätzlichen Linse (19), die die kleinste optische Vergrößerung zeigt, kleiner ist als 0,5; wobei eine gemeinsame optische Vergrößerung des Objektivs (08) und der zusätzlichen Linse (19), die die größte optische Vergrößerung zeigt, größer ist als 2.

12. Mikroskopischer Satz nach einem der Ansprüche 9 bis 11, **dadurch gekennzeichnet, dass** er weiter mindestens zwei verschiedene Ausleuchtungseinheiten (17) umfasst, die jeweils an dem zweiten Abschnitt (18) der Befestigungseinheit (13) befestigt werden können.

## Revendications

1. Microscope numérique destiné à capturer des images d'un échantillon (34) à examiner microscopiquement avec une profondeur de champ étendue ; comprenant :
- un support (01) pourvu d'une ouverture (16) destinée à recevoir une unité optique (07), l'ouverture (16) du support (01) présentant une section transversale circulaire ; et
- une unité optique (07) comprenant :
o un objectif (08) destiné à collecter la lumière émanant de l'échantillon (34) à examiner microscopiquement ;
o un capteur d'image (09) destiné à convertir une image transférée de l'objectif (08) au capteur d'image (09) en un signal électrique ;
o un système optique microélectromécanique (12) sur un chemin optique allant de l'objectif (08) au capteur d'image (09), le système optique microélectromécanique (12) étant configuré pour étendre une profondeur de champ au niveau du chemin optique ; et
o une unité de montage (13) comprenant une première partie (14) destinée à monter de façon amovible l'unité de montage (13) dans l'ouverture (16) du support (01), une deuxième partie (18) destinée à monter de façon amovible une unité d'éclairage (17) sur l'unité de montage (13), et une troisième partie (21) destinée à monter de façon amovible une lentille supplémentaire (19) sur l'unité de montage (13) dans un axe optique (22) de l'objectif (08) ; la première partie (14) de l'unité de montage (13) présentant une section transversale circulaire qui s'ajuste dans la section transversale circulaire de l'ouverture (16) du support (01) ; la première partie (14) de l'unité de montage (13) étant dotée d'une forme cylindrique ; la deuxième partie (18) de l'unité de montage (13) étant dotée d'une forme cylindrique ; la première partie (14) et la deuxième partie (18) de l'unité de montage (13) étant agencées coaxialement ; un diamètre de la première partie (14) de l'unité de montage (13) étant supérieur à un diamètre de la deuxième partie (18) de l'unité de montage (13) ; et la troisième partie (21) de l'unité de montage (13) formant une partie d'une monture à baïonnette destinée à recevoir une partie homologue de la monture à baïonnette formée au niveau de la lentille supplémentaire (19).

2. Microscope numérique selon la revendication 1, **caractérisé en ce que** le diamètre de la première partie (14) de l'unité de montage (13) est configuré selon la norme 76 mm, le diamètre de la deuxième partie (18) de l'unité de montage (13) étant configuré selon la norme 66 mm.

3. Microscope numérique selon la revendication 1 ou 2, **caractérisé en ce que** la partie homologue de la monture à baïonnette est formée par au moins deux ailes au niveau d'une circonférence de la lentille supplémentaire (19).

4. Microscope numérique selon l'une des revendications 1 à 3, **caractérisé en ce que** la troisième partie (21) de l'unité de montage (13) comprend des premiers contacts électriques destinés à venir au contact de deuxièmes contacts électriques de la lentille supplémentaire (19), les deuxièmes contacts électriques de la lentille supplémentaire (19) étant connectés électriquement à un circuit d'identification de la lentille supplémentaire (19).

5. Microscope numérique selon l'une des revendications 1 à 4, **caractérisé en ce que** l'unité optique (07) est configurée pour fonctionner dans une combinaison fixe du système optique microélectromécanique (12), de l'objectif (08) et d'un boîtier (11) qui abrite au moins le système optique microélectromécanique (12) et le capteur d'image (09).

6. Microscope numérique selon l'une des revendications 1 à 5, **caractérisé en ce que** le système optique microélectromécanique (12) comprend un réseau de micromiroirs mobiles, chacun des micromiroirs mobiles présentant un degré de liberté en rotation et un degré de liberté en translation.

7. Microscope numérique selon l'une des revendications 1 à 6, **caractérisé en ce que** l'unité d'éclairage (17) prend la forme d'un éclairage à anneau de lumière ; l'unité d'éclairage (17) étant dotée d'une forme annulaire circulaire ; l'unité d'éclairage (17) comprenant une pluralité d'éléments lumineux (41) qui sont agencés sur des cercles (42) sur la forme annulaire circulaire ; et les cercles (42) des éléments lumineux (41) pouvant être alimentés indépendamment.

8. Microscope numérique selon la revendication 7, **caractérisé en ce que** les cercles (42) des éléments lumineux (41) sont subdivisés en au moins quatre secteurs (43), les secteurs (43) des éléments lumineux (41) pouvant être alimentés indépendamment.

9. Kit de microscope, comprenant un microscope selon l'une des revendications 1 à 8, et au moins deux lentilles supplémentaires (19) pouvant être chacune montées sur la troisième partie (21) de l'unité de montage (13), les lentilles supplémentaires (19) présentant des grossissements optiques différents.

10. Kit de microscope selon la revendication 9, **caractérisé en ce qu'**un grossissement optique commun de l'objectif (08) et de la lentille supplémentaire (19) présentant le plus gros grossissement optique est supérieur à cinq fois un grossissement optique commun de l'objectif (08) et de la lentille supplémentaire (19) présentant le plus faible grossissement optique.

11. Kit de microscope selon la revendication 9 ou 10, **caractérisé en ce qu'**un grossissement optique commun de l'objectif (08) et de la lentille supplémentaire (19) présentant le plus faible grossissement optique est inférieur à 0,5 ; un grossissement optique commun de l'objectif (08) et de la lentille supplémentaire (19) présentant le plus gros grossissement optique étant supérieur à 2.

12. Kit de microscope selon l'une des revendications 9 à 11, **caractérisé en ce qu'**il comprend en outre au moins deux unités d'éclairage (17) différentes pouvant être chacune montées sur la deuxième partie (18) de l'unité de montage (13).
